# EUROPEAN PATENT APPLICATION

(11) **EP 1 835 276 A1**
(43) Date of publication of application: **19.09.2007**
(21) Application number: 06111193.6
(22) Date of filing: 15.03.2006
(51) Int. Cl.: G01N 15/14

(54) **Apparatus for determining compositional properties of a material**

(71) Applicant: FOSS Analytical A/S, 3400 Hilleroed (DK)
(72) Inventor: Thomsen, Henrik FOSS Analytical A/S, 2450, Copenhagen SV (DK); Skærlund Frandsen, Anders FOSS Analytical A/S, 3550, Slangerup (DK); Born, Christian FOSS Analytical A/S, 2840, Holte (DK); Brix Larsen, Ole FOSS Analytical A/S, 3450, Allerød (DK); Holm, Claus FOSS Analytical A/S, 2100, Copenhagen OE (DK)
(74) Representative: Hilton, Charles Paul

(57) **Abstract**

An apparatus, such as a flow cytometer, for determining compositional properties of a material (38), comprises sensing means (24) having an output responsive to components of interest within a sample, here liquid (38), at a measurement location (22). A flow regulator, such as a pump (36), is provided in flow communication with the measurement location (22) and with the liquid sample (38). Control means (34) is adapted to analyse, such as by employment of an pulse height analyser (32), the output to determine a contribution thereto by noise and to control the operation of the flow regulator (36) to regulate presentation of the sample, here the flow rate, at the measurement location (22) in a manner dependent on the determined noise contribution.

## Description

The present invention relates to an apparatus for determin ing compositional properties of a material and in particular to apparatus for determining the compositional properties of a material by means of its interaction with optical radiation.

In the context of the present invention "optical radiation" shall be taken to mean any or all of that part of the electromagnetic spectrum extending from and including ultraviolet radiation to and including far infra-red radiation. The term "optical" and related terms shall be construed accordingly.

Such an apparatus normally comprises a measurement location; presentation means, which itself may at least partially define the measurement location, for presenting a sample at the measurement location; sensing means for detecting during a measurement period electromagnetic radiation associated with the sample at the measurement location and providing a measurement signal representative of this as an output; and an analyser for analysing the output to determine one or more compositional properties of the sample.

In known apparatus for the optical determination of the number of particles in a liquid sample the measurement location is typically realised as a suitably transparent portion of a measurement cuvette which, together with an associated flow generator such as a peristaltic pump or syringe pump, comprises a presentation means. The determination is typically a simple counting procedure where the particles to be counted are detected by measuring optical radiation from the sample flowing past the transparent portion. In one known apparatus of this type the particles are stained, for example by adding a dye to the liquid sample, and counting is made by measuring the intensity of stimulated fluorescence of the stained particles as a controlled volume of the sample flows past one or more sensors at the transparent portion of the measurement station or cuvette. It is also known to count by irradiating the flowing sample with optical radiation, usually laser light, and employing sensors to detect the optical radiation scattered by the particles to be counted. To facilitate the particle counting the measurement cuvette is dimensioned to provide a liquid sample flow in a thin layer such that substantially only one cell or particle of interest can be contained within its thickness. In another known apparatus of this type, a so called "flow cytometer", the liquid sample stream flows through the measurement cuvette in a thin string or layer surrounded by a sheath or carrier liquid.

US 6,089,078 of Chelveder et al. discloses such an apparatus, here a flow cytometer, with a feedback control to vary the flow speed of the liquid sample past the sensors in dependence of the signal measured by the sensor. In this known apparatus the flow speed is varied so that the number of particles counted during a predetermined measurement period falls within an optimum response zone for the sensor.

It is a problem with known apparatus for determining the compositional properties of a material that no account is taken of the unwanted contributions to measurement signal by signals unrelated to the component(s) of interest. Such unwanted signals are, in the context of the present invention, to be considered as noise against which the measurement signals originating from the component(s) of interest are to be identified.

It is an aim of the present invention to alleviate this problem by providing an apparatus in which effects of noise on the measurement signals are compensated for "dynamically" (i.e. variably) during operation of the apparatus.

This is achieved by an apparatus as described in and characterised by the present Claim 1. Thus by varying the presentation of a sample at a measurement location in a manner dependent on measured noise in the output signal from the sensing means then noise may be compensated for dynamically dependent on the condition of the sample being measured. One advantage of this is that the measurement period during which a determination is made may be adapted to the condition of the sample and so improving operating efficiency. This may, for example, permit more samples to be analysed during any operating period.

According to one embodiment of the present invention, the control means is adapted to regulate a flow of the same sample as that sample from which the output of the sensor is analysed to determine the noise level. This means that any variations between samples even from the same batch can be compensated for. Preferably this is achieved by analysing the output signal from an initial portion of a flowing sample at the measurement location in order to determine a contribution by noise and determining the compositional properties from signals from a subsequent portion of the same sample as it flows past the measurement location at a rate dependent on the so determined noise contribution.

These and other advantages will become apparent from a reading of an exemplary embodiment of the present invention described with reference to the drawings of the accompanying figures of which:
Fig. 1 illustrates schematically a first embodiment of an apparatus according to the present invention;
Figs. 2 illustrates the graphical output presented by the embodiment of Fig. 1, where Fig, 2a illustrates an output with an acceptable noise level; Fig.2b illustrates one with too high a noise level; and Fig. 2c illustrates one with a too low noise level;
Fig.3 illustrates the form of the signal output from sensing means of the embodiment of Fig. 1 ;
Fig. 4 illustrates schematically a second embodiment of an apparatus according to the present invention;
Fig. 5 illustrates schematically a third embodiment of an apparatus according to the present invention; and
Fig. 6 illustrates schematically a compressible sample holder for use in the third embodiment illustrated in Fig. 5.

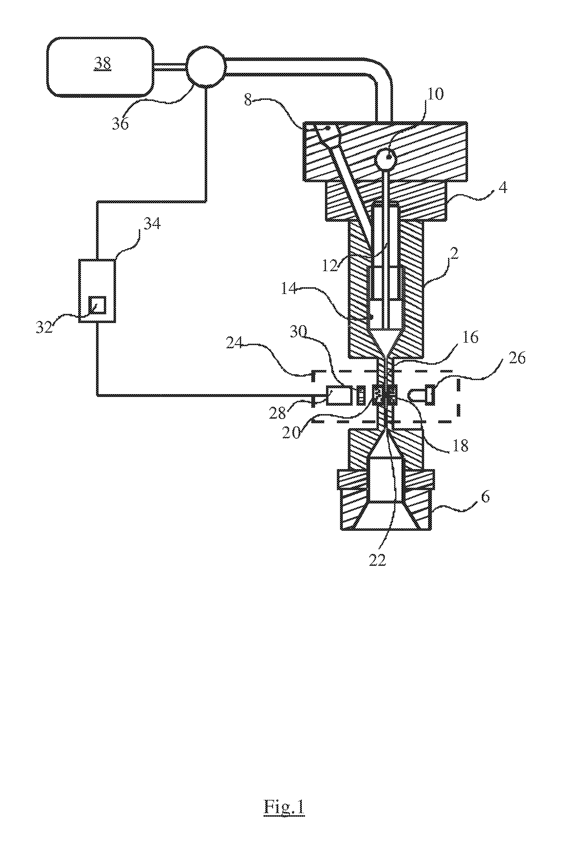

Considering now Fig. 1, a measurement cuvette 2 is shown interconnected with elements 4, 6 for respectively introducing liquid samples into and receiving the liquid samples from the cuvette 2. In element 4 a pathway 8 is provided for introducing a sheath liquid and a pathway 10 is provided for introducing the liquid sample. Pathway 10 is connected to a narrow bore, for example as provided by a capillary tube 12, which extends into the cuvette 2. Pathway 8 is connected to the surroundings 14 of the tube 12. The cuvette 2 is shaped at the surroundings 14 of the tube 12 such that liquid sample flowing from the tube 12 will be formed as a thin string inside a sheath of liquid from pathway 8 as they together flow through a narrow passage 16 of the cuvette 2. It will be appreciated that the cuvette 2 and connecting elements 4, 6 are configured to form a part of a conventional flow cytometer.

Some or all of the region of the cuvette 2 that defines the narrow passage 16 is formed of suitably transparent material, here shown as opposing windows 18, 20, which delimits a measurement location 22. Sensing means are shown generally at 24 and in the present embodiment comprise an excitation source, such as a light emitting diode (LED) 26, that is located to illuminate the sample in the narrow passage 16 through window 18 and a detector 28 that is located to detect fluorescence from the liquid sample in the narrow passage 16 that is excited by the light from LED 26 and that passes through the window 20. Suitable filters 30 may be provided, such as shown here between the window 20 and the detector 28, to block light from the LED 26 from impinging on and being detected by the detector 28.

The detector 28 is adapted to provide an output signal indicative of detected optical radiation to control means 34 which is configured to control the operation of a pump 36 in dependence of a determined contribution of noise to the output signal. In the present embodiment an analyser 32, here shown as a functional element of control means 34, is adapted to receive the output signal from the detector 28 and to make the determination of noise as will be described further below. The pump 36 connects the pathway 10 to a liquid sample 38 and operates to regulate the flow of liquid sample through the cuvette 2 as the pump speed is varied. The pump 36 and cuvette 2 here cooperate to provide a presentation means for varying the presentation of the flowing sample at the measurement location 22.

As is known in the art of flow cytometry the liquid sample 38 typically comprises a mixture of a sample to be analysed, such as a milk sample, and a suitable dye solution. The dye solution itself may comprise a suitable particle specific binding agent, such as a DNA-specific colorant as well as chemicals for dissolving particle walls to expose the DNA of the particle to the colorant. It is then this mixture that flows through the cuvette 2 during counting.

In operation of the apparatus according to Fig. 1 the so stained particles that are entrained in the sample liquid string pass by the sensing means 24 where the light from the LED 26 causes individual stained particles to fluoresce. The detector 28 then registers these individual fluorescence events as electric pulses and generates an output representative thereof in a form suitable for manipulation in the analyser 32. In the present embodiment the analyser 32 may suitably be in the form of a pulse height analyser. In such an analyser 32 the voltage size of each electric pulse is quantified and the pulse then assigned to one of a plurality (512 say) channels, each of which represents a small voltage interval.

According to the present embodiment the analyser 32 is adapted to analyse the noise in the output from the detector 28 during the flow through the cuvette 2 of an initial portion of the sample and if it is too high to generate in cooperation with the control means 34 a control signal to slow the pump speed and hence reduce the flow of the remaining portion liquid sample through the cuvette 2. Of course the control means 34 (here the analyser 32) may be additionally configured to generate a control signal for output by the control means 34 in the event that the noise level is low. In this case the pump speed may be increased to permit a faster analysis of the liquid sample 38. Thus the speed of the pump 36 may be regulated in dependence on the determined noise level, possibly in the event of the noise level falling either side of a predetermined threshold.

In general, the counts acquired from this initial portion are discarded by the analyser 32 and a determination of the number of particles is made within the analyser 32 using signals from a subsequent portion, typically all of that remaining, of the sample 38 as it flows through the cuvette 2. If, for example, the sample 38 has a volume of 10µl say then the first 0.5µl say would typically be employed in the determination of the contribution of noise to the output signal from detector 28.

According to a further development of the present invention the noise determination may be made a plurality of times during the flow of the initial portion through the cuvette 2. In this manner the effects of a change in the flow rate may be monitored and the new noise determination employed to control the pump 36 in a type of feedback control loop until the noise level is optimised or falls within a predetermined threshold range.

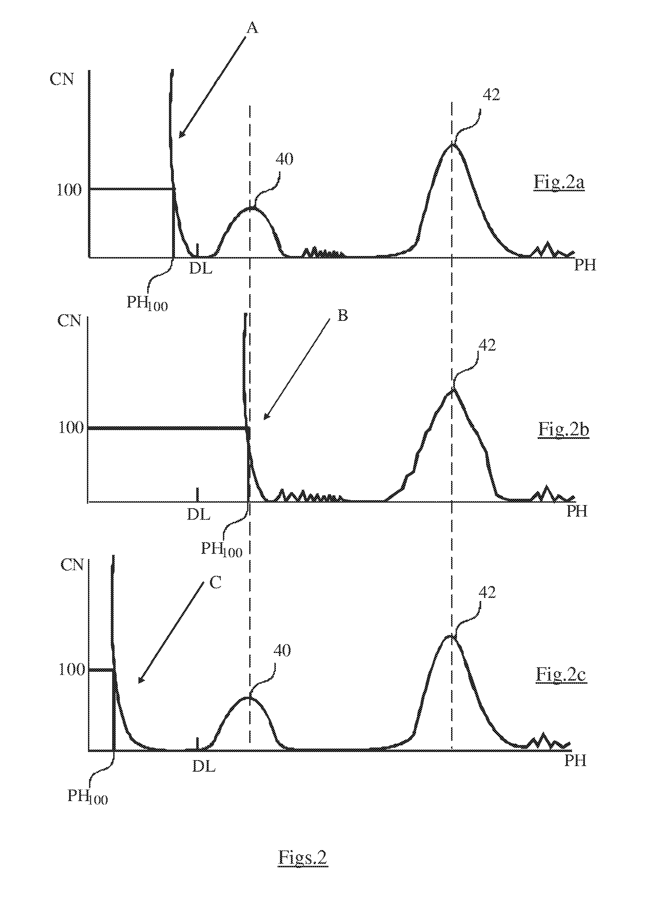

The operation of the embodiment of the invention shown in Fig. 1 to adapt the flow rate in dependence of measured noise will now be explained in greater detail with reference to the graphical representations of Figs. 2. These illustrate pulse height distributions (Count Number, CN versus Channel Number or Pulse Height, PH) determined by the analyser 32 from the output of the detector 28 during the initial portion of the sample liquid flow past the sensing means 24 at the same flow rate.

A representative pulse size distribution obtained by the analyser 32 of the apparatus of Fig. 1 from a milk sample that presents a high level of noise, but which is flowing past the measurement location 22 at an appropriate speed is illustrated by the curve A depicted in Fig. 2a. Fluorescence signals from other sources represent noise against which particles of interest (here bacteria for example) are to be counted. A discriminator level, DL, is in the present embodiment set at a fixed channel number and in normal operation it is intended that the analyser 32 operates to assign counts in channels lower than this level, DL, as noise. For sake of example only it can be seen that particles of interest generate two fluorescence peaks 40, 42 separated in energy (channel number, PH).

In certain circumstances the noise from the flowing liquid sample is unacceptably high as is illustrated by the curve B of Fig. 2b. The noise makes a significant contribution to the size of the count number, CN, at the discriminator level channel, DL. Indeed in the present example one of the fluorescence peaks 40 is indistinguishable from the noise. It is interesting to note that if the analyser 32 is operated to set a dynamic discriminator level, DL', from an analysis of the curve B in a manner known in the art, then lower energy peak 40 may not be detectable.

In other circumstances the noise level from the sample may be very low, as is illustrated by the curve C of Fig. 2c. As can be seen, in these circumstances the fluorescence peaks 40, 42 from the particles of interest are easily identified and distinguished from the noise by the analyser 32.

The analyser 32 according to the exemplary embodiment of Fig. 1 is adapted by suitable programming to determine from a pulse height distribution curve a channel number, PH₁₀₀, at which the count number, CN, corresponds to a predetermined threshold number, 100 say. The analyser 32 then operates to compare this channel number, PH₁₀₀, with that of the discriminator level, DL. In circumstances where the noise level is high (Curve B of Fig. 2b) then this channel number PH₁₀₀ will be a higher number than the channel set for the discriminator level DL and the flow rate of liquid through the measurement cuvette 2 should be lowered. In circumstances where the noise level is low (Curve C of Fig. 2c) then this channel number PH₁₀₀ will be a lower number than the channel set for the discriminator level DL and the flow rate of liquid through the measurement cuvette 2 may be increased.

The analyser 32 generates a signal indicative of the magnitude and preferably also the sign of this difference as a determination of the contribution of noise to the output signal from the sensing means 24 for further processing within the control means 34. It will be appreciated that this further processing may also be carried out within the analyser 32. The sign may be employed to determine whether to speed up or slow down the operation of the pump 36 and the size is employed to determine by how much the pump 36 is to speed up or slow down. The control means 34 is, in the present embodiment, provided with computational means (not shown) separate from the analyser 32. This computational means is configured to generate a control signal for output to the pump 36 in dependence of the magnitude and sign indicated by the signal generated by the analyser 32. The control means 34 may be provided with a mathematical algorithm, such as can readily be derived from empirical observations, which links magnitude to pump speed, or with a lookup table in which is stored pump speeds indexed against size of the channel number difference between DL and PH₁₀₀. Either or both of these are made accessible to the computational means of the control means 34 for use in generating the control signal. Upon receipt of this control signal from control means 34 the pump 36 operates to vary its pump speed accordingly and consequently the flow rate of liquid from the sample 38 through the measurement cuvette 2.

In one variation of the exemplary embodiment of the invention illustrated in Fig. 1 the analyser 32 and the control means 34 are adapted to repeat this above described process to determine the noise contribution and dependently vary the operation of the pump 36 a further one or more times during the initial portion of the measurement period, typically until either the difference between the discriminator level channel number DL and that at which the predetermined count number is first obtained PH₁₀₀ is within a predetermined range, possibly zero, or until the channel number at which the predetermined count number PH₁₀₀ remains unchanged consequent on a change in flow rate.

In a further variation of the exemplary embodiment according to Fig. 1 the noise determination made for one sample 38 is used to dependently vary the operation of the pump 36 to establish a flow rate of a subsequent sample.

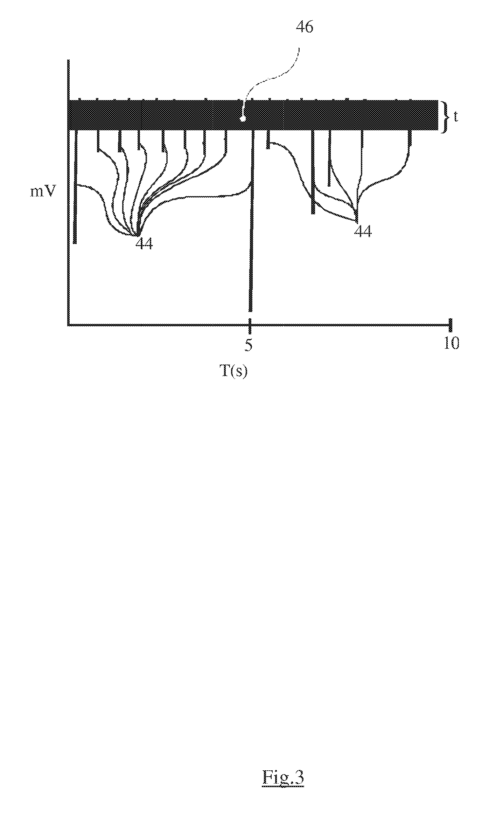

Alternatively or additionally the control means 34 may be configured to analyse the output signal from sensing means 24 to determine a contribution by noise thereto by measuring a variation in a baseline component of the signal. A typical output signal from detector 28 of sensing means 24 is illustrated in Fig. 3 in which is shown a variation in output voltage (in millivolts) mV of the detector 28 with time in seconds T(s) over a total measurement period of 10 seconds for the sample 38. As can be seen from the figure a plurality of individual fluorescent events are recorded as relatively narrow intensity peaks illustrated generally at 44 extending from a rapidly varying baseline 46. The average variation of the baseline may be represented by a thickness, t, which itself is indicative of a magnitude of noise present in the signal.

According to the present invention the control means 34 may then be adapted to determine this thickness t, preferably but not essentially, in an initial portion of the measurement period, say the first 0.5 seconds thereof and to generate an output signal to vary the speed of the pump 36 and hence the flow rate of the remainder of the liquid sample 38 through the measurement cuvette 2 in a manner tending to reduce the thickness t of the baseline 46 and hence the noise component of the signal output from the detector 28. As described above, the control means 34 may include suitably programmed computational means having access to one or both an algorithm or a lookup table here linking the determined thickness t to a pump speed.

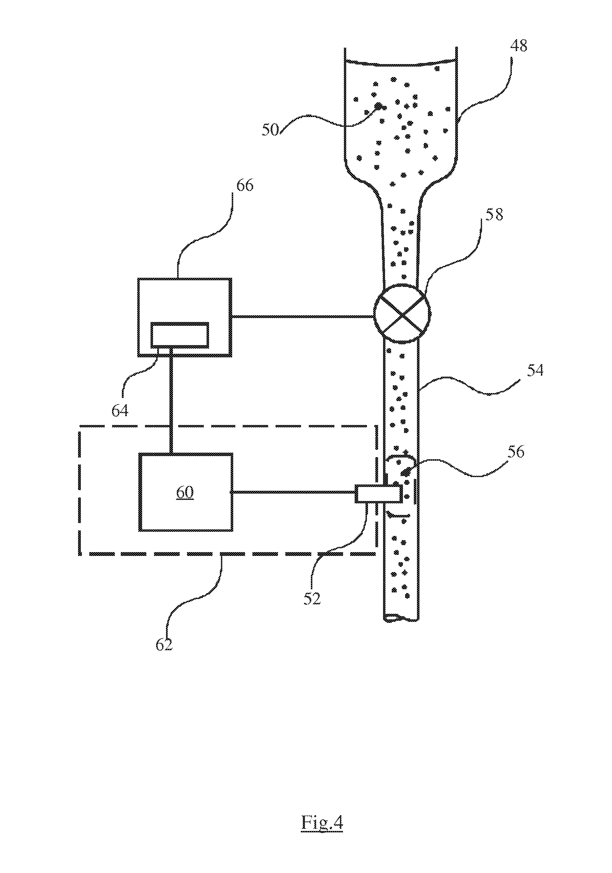

Considering now an embodiment of the present invention illustrated in Fig. 4 in which a sample holder 48 for a flowable particulate material 50, such as powder, cereal grains or granular pharmaceutical products is arranged for flow of the particulate material 50 past an optical probe 52 extending into a flow conduit 54 at a measurement location shown here as a region 56 of the conduit 54 proximal the probe 52. In the present example the sample holder 48 and the flow conduit 54 are relatively orientated such that the particulate material 50 flows under the action of gravity at a rate determined by the degree of opening of regulator valve 58. The flow conduit 54 and valve 58 together cooperate to provide a presentation means by which the presentation of the flowing sample 50 at the measurement location 56 may be varied.

The optical probe 52 is configured to detect optical radiation after its interaction with the particulate material 50 at the measurement location 56 and to transmit the detected optical radiation to a spectrometer 60 that together with the probe 52 comprises sensing means 62. The probe 52 and the spectrometer 60 may cooperate in a known manner to also transmit optical radiation, for example at discrete wavelengths determined by the spectrometer 60, into the measurement region 56 of the conduit 54. The sensing means 62 provides an output representative of the wavelength dependent intensity variation of optical energy detected by the probe 52 to an analyser portion 64 of control means 66.

The analyser portion 64 is in the present embodiment adapted to determine a direct current DC component of the output signal and compare it against a threshold value. In the event that the DC component exceeds said threshold value then the control means 66 generates a control signal related to the difference between the determined DC component and the threshold value for output to the regulator valve 58 which automatically varies its degree of opening in dependence thereof.

It will be appreciated that a pump or other flow generator may be included as a substitute for the gravity flow arrangement described above. In which case the flow regulator valve 58 may be omitted and flow control achieved by direct control of the flow generator. Indeed the apparatus of Fig. 4 may be readily adapted in a manner obvious to a person skilled in the art for operation in a flow conduit of a process line or in a bypass flow conduit associated therewith, whereby a portion of the flow in the main conduit is diverted to a measurement location and thereafter possibly returned to the main conduit.

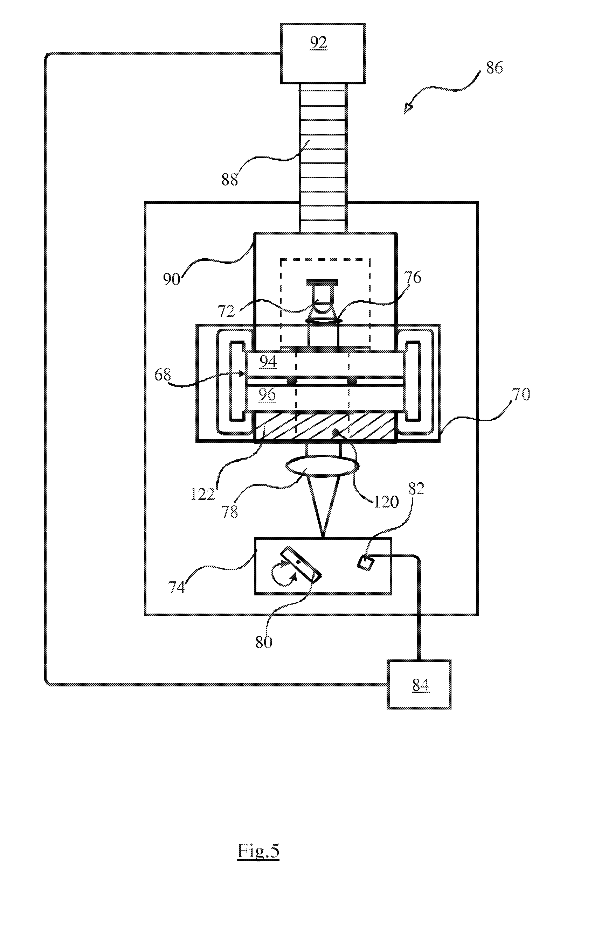

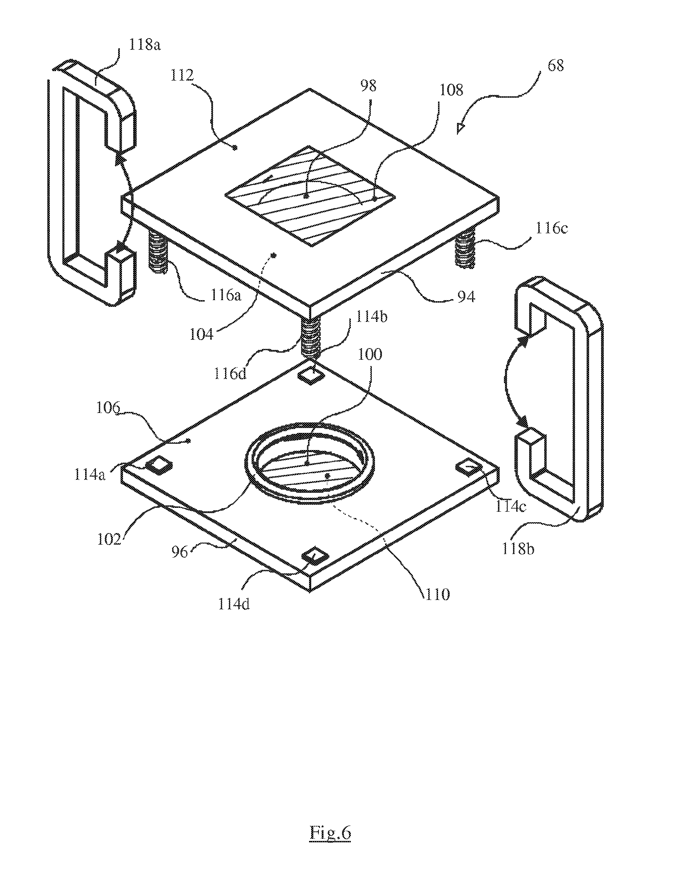

Consider now a third embodiment of an apparatus according to the present invention that is illustrated schematically in Fig. 5. A sample holder, shown generally at 68 and described in more detail below with reference to Fig.6, is shown situated at a measurement location 70 of a transmission type spectrometer. A sensing means, here comprising a broadband optical source 72 (typically an infra-red broadband optical source) and cooperable spectrometer 74, are disposed in a conventional transmission arrangement. In this arrangement optical energy from the source 72, optionally passing through a first lens arrangement 76, illuminates a sample held stationary in the sample holder 68. After its transmission through and its interaction with the sample the optical energy, optionally passing through a second lens arrangement 78, is incident upon an entrance to the spectrometer 74. The spectrometer 74 functions generally to provide a measurement signal indicative of the wavelength (or conversely frequency) dependent variations in optical energy that is incident on the entrance. In the present illustrative embodiment the spectrometer 74 is shown to comprise a movable dispersion element 80 that, as it moves, causes narrow portions of the incident wavelength band to illuminate an optical detector 82. In a known manner the movement of the dispersion element 80 will cause the optical detector 82 to generate the measurement signal which is then output to a control means 84.

The control means 84 is adapted to analyse the measurement signal to determine a contribution thereto by noise and provide to a biasing arrangement 86 a signal according to which the biasing arrangement 86 controls the presentation of the sample at the measurement location 70 in a manner that is responsive to the so determined contribution. To this end, the control means 84 may comprise a suitably programmed data processor configured to analyse the measurement signal to determine a value of a signal to noise ratio of that signal. This value is then used to regulate the operation of the biasing arrangement86 in a manner that tends to increase it (that is, to reduce the noise).

According to the present embodiment the sample holder 68 is made resiliently compressible so as to be able to vary a thickness (in the direction of the transmission of the optical radiation there through) of a retained sample. The biasing arrangement 86 comprises means for presenting a variable bias force at the sample holder 68 to thereby adjust the compressional state thereof. Thus, together the biasing arrangement 86 and the sample holder 68 comprise the presentation means of the apparatus. In the present embodiment the means for presenting a variable bias force at the sample holder 68 is realised by a shaft 88 (here a threaded shaft) and piston 90 arrangement. The shaft 88 is connected to a drive system 92 towards one end and to the piston 90 towards its opposite end. The piston 90 here is formed with a hollow body the periphery of which contacts the sample holder 68. As the drive system 92 operates to extend the shaft 88 towards the sample holder 68 the piston 90 increases the bias force on the holder 68, tending to compress the sample and reduce its thickness. As the drive system 92 operates to retract the shaft 88 away from the sample holder 68 the biasing force exerted by the piston 90 on the sample holder will decrease, tending to reduce the compression of the sample and increase its thickness. The degree of movement of the shaft 88 is controlled by the operation of the drive system 92 which in turn is controlled by the output from the control means 84.

A sample holder 68 suitable for use in the apparatus of Fig. 5 is illustrated in Fig. 6. The sample holder 68 comprises of two similar rigid plates, for the sake of clarity of description an upper plate 94 and a lower plate 96, having corresponding through holes 98,100 made therein. A resiliently compressible sealing member (here a rubber 'O' ring) 102 is provided on at least one of the facing inner surfaces 104, 106 of respective plates 94,96 about the periphery of the associated through hole 98 or 100. For the sake of clarity of description it will be assumed that the sealing member 102 is provided on only that surface 106 of the lower plate 96. Covers 108,110 that are optically transparent in the wavelength region of interest are provided on outer surfaces (112 for example) of the two plates 94,96 so as to cover the associated through holes 98,100 and prevent in use egress of sample therefrom. Locating lugs 1 14a..d are provided on one of the facing surfaces (here 106 for example) and cooperable spring biasing means 116a..d are provided on the other facing surface 104 so that as the two plates 94,96 are brought together each spring biasing means 116a..d overlays an associated lug 1 14a..d. In this way the two plates 94,96 can easily be collocated. In the present example clamps 118a,b are provided to hold the two plates 94,96 together in use and are arranged to tend to bias the two plates 94,96 towards one another. This is in opposition to the action of the spring biasing means 116a..b which compress as the two plates 94,96 are brought together and so tend to bias the two plates 94,96 away from one another.

In this exemplary sample holder 68 the two plates 94,96 are separated and a sample is introduced into a well formed by the cooperation of the through hole 100 and its associated cover 110. The two plates 94,96 are then brought together and held in place by the clamps 118a,b. The compressible sealing member 102 seals against the inner surface 104 of the upper plate 94 to seal the sample between the two covers 108,110. The sample holder 68 may then be introduced into the measurement location 70 of the apparatus of Fig. 5 and, for example only, sited on a raised support 120 which has a through hole 122 intended in use to correspond with the through hole 100 in the plate 96 (and also through hole 98 in plate 94). The periphery of the hollow piston 90 is brought into contact with the outer surface 112 of the upper plate 94 and adjusted to exert a biasing force that tends to urge the plates 94,96 together against the counter bias provided by the spring biasing means 116a..d, as well as the seal 102, as they become compressed. During operation the piston 90 may be further adjusted in response to the control signal from control means 84.

Further modifications to the above described exemplary embodiments will be apparent to the skilled person and are considered a part of the present invention. For example the embodiment of Fig. 1 may additionally or alternatively operate to vary the flow rate in dependence of a determined DC component of the signal from the detector 28, or the analyser portion 64 of the controller 66 of the embodiment of Fig. 4 may operate to determine a baseline variation of the signal from sensing means 62. Moreover the apparatus of both Fig. 1 and Fig. 2 are represented with reference to functional elements the operation of each of which may be realised by one or more physical units or the operation of some of which may be combined in a same physical unit. Furthermore the apparatus of Fig. 5 may be additionally or alternatively configured to operate in standard reflectance and transflectance modes and the spectrometer may be formed of other known devices, such as a fixed dispersion element monochromator or a Fourier transform spectrometer, suitable for the generation of an optical spectrum.

It is to be emphasized that the scope of the present invention is defined by the claims appended hereto.

## Claims

1. An apparatus for determining compositional properties of a material comprising sensing means (24;62;72,74) having an output responsive to components of interest within a sample of the material; presentation means (2,36;54,58;68,86) for presenting the sample for measurement by the sensing means (24;62;72,74) at the measurement location (22;56;70); and control means (34;66;84) operably connected to the presentation means (2,36;54,58;68,86) to control the presentation of the sample; **characterised in that** the control means (34;66;84) is adapted to analyse the output to determine a contribution thereto by noise and to control the operation of the presentation means (2,36;54,58;68,86) to regulate the presentation of the sample at the measurement location (22;56;70) in a manner dependent on the determined contribution.

2. An apparatus as claimed in Claim 1 **characterised in that** the presentation means (2,36;54,58) comprises a flow regulator (36;58) coupled to a conduit (10; 54) for a flowable sample disposed for flow communication with the measurement location (22;56), the flow regulator being also operably connected to the control means (34;66) to regulate the presentation of the flowable sample at the measurement location (22;56) in a manner dependent on the determined contribution by regulating a flow rate of the sample past the measurement location (22;56).

3. An apparatus as claimed in Claim 2 **characterised in that** the flow regulator (36) is adapted to provide a flow of a predetermined liquid sample volume (38) past the measurement location (22) during a measurement period (T) a n d **in that** the control means (34) is adapted to control the flow regulator (36) to regulate the flow rate of the same liquid sample volume (38) as that in which the determination of the contribution by noise to the output is made.

4. An apparatus as claimed in Claim 2 **characterised in that** the flow regulator (36) is adapted to provide a flow of a liquid sample volume (38) past the measurement location (22) during a measurement period (T) **and** i n t h a t the control means (34) is adapted to determine the contribution by noise to the output associated with that liquid sample volume (38) and control the flow regulator (36) in dependence thereof to regulate the flow rate of a subsequent liquid sample volume.

5. An apparatus as claimed Claim 3 or Claim 4 **characterised in that** the apparatus is configured to determine a number of particles of interest within a liquid sample (38) wherein the sensing means (24) has the output responsive to an intensity of optical radiation associated with particles within the liquid sample (38) flowing past the measurement location (22).

6. An apparatus as claimed in Claim 5 **characterised in that** the sensing means (24) has the output responsive to fluorescent events **and** i n t h a t the control means (34) is configured with an analyser (32) adapted to process the output to generate a pulse size distribution from the sample (38) and to analyse the distribution to determine the contribution by noise.

7. An apparatus as claimed in any preceding claim **characterised in that** the control means (34;66) is adapted to analyse the output to measure a direct current (DC) component thereof to determine the contribution thereto by noise.

8. An apparatus as claimed in Claim 2 **characterised in that** the sensing means (62) comprises an optical probe (52) and spectrometer (60) arrangement having an output responsive to optical radiation associated with particulate material (50) flowing in the conduit (54) past the measurement location (56).

9. An apparatus as claimed in Claim 1 **characterised in that** the presentation means (68,86) comprises a compressible sample holder (68) and a biasing arrangement (86) cooperable with the sample holder (68) to exert a variable bias force thereon and operably connected to the control means (84) to regulate the presentation the sample at the measurement location (70) in a manner dependent on the determined contribution by varying the exerted bias force.
